# EUROPÄISCHE PATENTSCHRIFT

(11) **EP 0 605 461 B1**
(45) Veröffentlichungstag und Bekanntmachung des Hinweises auf die Patenterteilung: **17.05.1995**
(21) Anmeldenummer: 92918676.5
(22) Anmeldetag: 02.09.1992
(51) Int. Cl.: B60T 8/36, B60T 13/68, F16K 31/06

(54) **ELEKTROMAGNETBETÄTIGTES VENTIL, INSBESONDERE FÜR HYDRAULISCHE BREMSANLAGEN VON KRAFTFAHRZEUGEN**
ELECTROMAGNETIC VALVE, ESPECIALLY FOR HYDRAULIC BRAKE SYSTEMS OF MOTOR VEHICLES
SOUPAPE A COMMANDE ELECTROMAGNETIQUE, EN PARTICULIER POUR LES SYSTEMES DE FREINAGE HYDRAULIQUES DE VEHICULES A MOTEUR

(30) Priorität: 30.09.1991 DE 4132471
(43) Veröffentlichungstag der Anmeldung: 13.07.1994
(73) Patentinhaber: ROBERT BOSCH GMBH, 70442 Stuttgart (DE)
(72) Erfinder: SCHMIDT, Klaus, D-7141 Schwieberdingen (DE); MUELLER, Klaus, D-7146 Tamm (DE); WILDE, Werner, D-7141 Schwieberdingen (DE); ALAZE, Norbert, D-7145 Markgroeningen (DE); MEGERLE, Friedrich, D-7144 Asperg (DE); HERZOG, Kurt, D-7120 Bietigheim-Bissingen (DE); BAUMANN, Dietmar, D-7014 Kornvestheim (DE)
(86) Internationale Anmeldenummer: DE9200728
(87) Internationale Veröffentlichungsnummer: WO9307032

(56) Entgegenhaltungen:
- EP-A- 0 238 387
- CH-A- 463 221
- DE-A- 3 701 019
- DE-A- 4 030 963
- FR-A- 2 552 195
- GB-A- 2 237 100
- US-A- 3 592 228
- US-A- 3 759 293

## Beschreibung

### Stand der Technik

Die Erfindung geht aus von einem in einem Ventilblock angeordneten elektromagnetbetätigten Ventil, insbesondere für hydraulische Bremsanlagen von Kraftfahrzeugen mit Blockierschutz- und/oder Antriebsschlupfregeleinrichtung, nach dem Oberbegriff des Hauptanspruchs.

Es ist schon ein solches Ventil vorgeschlagen worden (DE-A-40 30 963, nachveröffentlicht), bei dem die Einstellung des Ankerhubes nur mit Schwierigkeiten vorzunehmen ist, weil eine Drosselscheibe mit sehr kleiner Drosselbohrung die Verwendung eines Meßwerkzeuges mit einem Taststift erschwert, der zum Angriff am Ventilschließglied achsgleich zum Führungsrohr durch die Durchgangsbohrung des Ventilkörpers eingeführt werden muß.

Aus FR-A-2 552 195 ist ein Ventil der eingangs genannten Art bekannt, bei dem in das ventilblockseitig offene Führungsrohr der mittels Gewinde axial verstellbare Ventilkörper eingreift. Dieser hat eine abgestufte Durchgangsbohrung relativ großen Durchmessers, welche in einen Ventilsitz mündet. Für die Einstellung des Ankerhubes ist es vor der Montage des Ventils im Ventilblock auf einfache Weise möglich, einen Taststift eines Meßwerkzeuges durch die Durchgangsbohrung des Ventilkörpers zu führen, weil der Bohrungsquerschnitt nicht eingeschränkt ist. Nach dem Einstellvorgang wird der Ventilkörper mit dem Führungsrohr durch einen Prägevorgang formschlüssig fixiert.

### Vorteile der Erfindung

Das erfindungsgemäße Ventil mit den kennzeichnenden Merkmalen des Hauptanspruchs ist demgegenüber insofern vorteilhaft, als es die Einstellung des Ankerhubes vor der Montage der Doppellippen-Manschette mit Drosseleinsatz erlaubt. Der Taststift eines Meßwerkzeugs kann daher von der Stirnseite des Führungsrohres her unbehindert in den Ventilkörper eingeführt und durch dessen Durchgangsbohrung in Angriff am Ventilschließglied gebracht werden. Nach abgeschlossener Einstellung des Ankerhubes und Befestigung des Polstückes im Führungsrohr kann auf einfache Weise das mit weiteren Bauteilen ergänzte Ventil durch Einstecken der mit Ringscheibe und Drosseleinsatz verbundenen Manschette vervollständigt werden. Von besonderem Vorteil ist außerdem die Ausbildung der Dichtung als doppellippige Manschette, weil die äußere Lippe als Rückschlagventil Verwendung finden kann.

Durch die im Unteranspruch aufgeführte Maßnahme ist auf einfache Weise eine vormontierbare Baugruppe mit unverlierbar festgelegten Einzelteilen geschaffen.

### Zeichnung

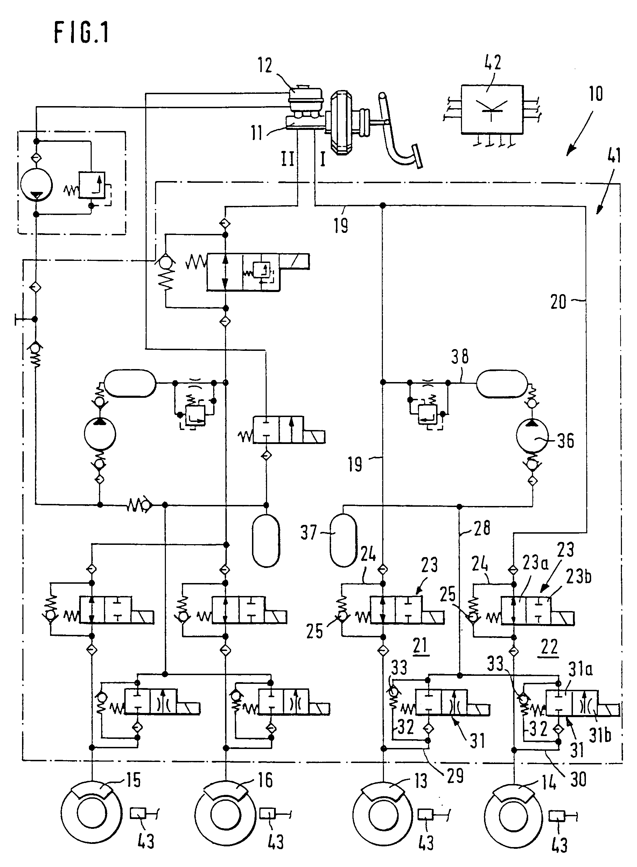

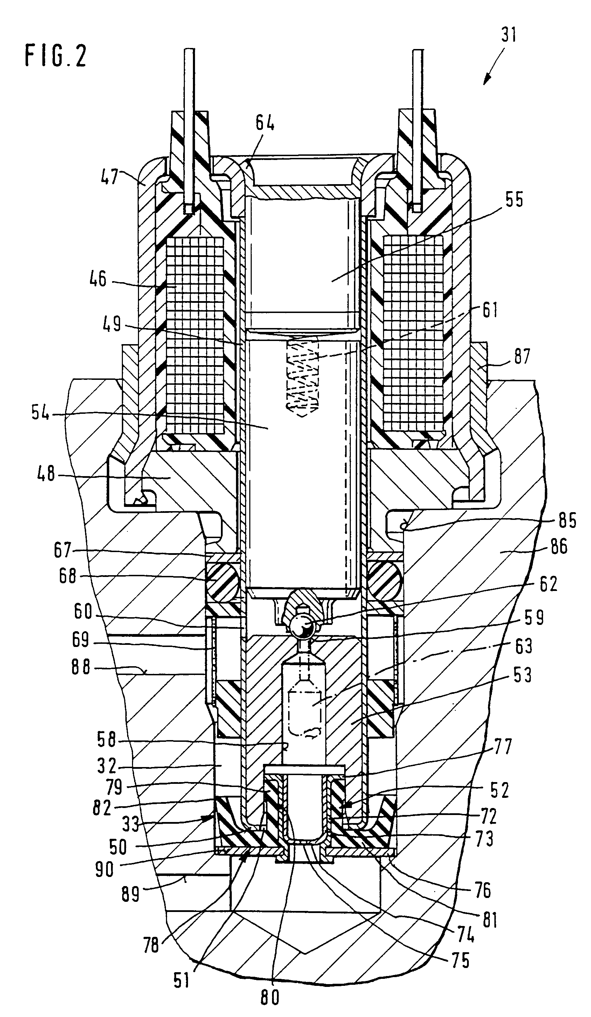

Ein Auführungsbeispiel der Erfindung ist in der Zeichnung vereinfacht dargestellt und in der nachfolgenden Beschreibung näher erläutert. Es zeigen Figur 1 ein Schaltbild einer hydraulischen Bremsanlage mit elektromagnetbetätigten Ventilen und Figur 2 einen Längsschnitt durch ein solches Ventil, in anderem Maßstab.

### Beschreibung des Ausführungsbeispiels

Eine in der Figur 1 dargestellte hydrarnlische Bremsanlage 10 für Kraftfahrzeuge weist einen pedalbetätigbaren Hauptbremszylinder 11 mit einem Druckmittel-Vorratsbehälter 12 auf. Ein erster Bremskreis I der Bremsanlage 10 ist Radbremsen 13, 14 nicht angetriebener Fahrzeugräder, z. B. der Vorderachse des Fahrzeugs zugeordnet. An einen zweiten Bremskreis II sind die Radbremsen 15, 16 angetriebener Fahrzeugräder, z. B. der Hinterachse des Fahrzeugs, angeschlossen. Die Bremsanlage 10 weist daher die sogenannte TT-Bremskreisaufteilung auf. Der Bremskreis I ist nachfolgend näher erläutert:
Der Bremskreis I hat eine vom Hauptbremszylinder 11 ausgehende, zur Radbremse 13 führende erste Bremsleitung 19. Von dieser Bremsleitung 19 zweigt eine zweite Bremsleitung 20 zur zweiten Radbremse 14 dieses Bremskreises I ab. Den Radbremsen 13, 14 ist jeweils eine Ventilanordung 21 bzw. 22 für die Bremsdruckmodulation zugeordnet. Die Ventilanordnungen 21, 22 besitzen je ein in der entsprechenden Bremsleitung 19, 20 angeordnetes Einlaßventil 23. Dieses ist als 2/2-Wege-Ventil mit einer federbetätigten Durchlaßstellung 23a und einer elektromagnetisch schaltbaren Sperrstellung 23b ausgebildet. Jedes Einlaßventil 23 ist durch eine Bypassleitung 24 mit einem darin angeordneten Rückschlagventil 25 überbrückt. Das jeweilige Rückschlagventil 25 hat eine Durchlaßrichtung von der entsprechenden Radbremse 13, 14 zum Hauptbremszylinder 11.

Zwischen dem jeweiligen Einlaßventil 23 und den Radbremsen 13, 14 geht von den zugeordneten Bremsleitungen 19, 20 eine verzweigte Rückführleitung 28 aus. Im jeweiligen Rückführleitungszweig 29 bzw. 30 ist ein Auslaßventil 31 der Ventilanordnungen 21, 22 für die Bremsdruckmodulation angeordnet. Die Auslaßventile 31 sind als 2/2-Wege-Ventil ausgebildet; sie haben eine federbetätigte Sperrstellung 31a und eine elektromagnetisch schaltbare Durchlaßstellung 31b mit Drosselwirkung. Die Auslaßventile 31 sind jeweils durch eine Bypassleitung 32 mit einem Rückschlagventil 33 mit Durchlaßrichtung zur jeweiligen Radbremse 13, 14 überbrückt.

Die Rückführleitung 28 führt zur Saugseite einer Hochdruckpumpe 36. Zwischen der Saugseite der Hochdruckpumpe 36 und den Auslaßventilen 31 der Ventilanordnungen 21, 22 ist eine Speicherkammer 37 zur Aufnahme von den Radbremsen 13, 14 entnommenem Druckmittel an die Rückführleitung 28 angeschlossen. Druckseitig geht von der Hochdruckpumpe 36 eine Förderleitung 38 für Druckmittel aus, welche zwischen der Ventilanordnung 21 und dem Hauptbremszylinder 11 an die Bremsleitung 19 angeschlossen ist.

Die zwischen dem Hauptbremszylinder 11 und den Radbremsen 13 bis 16 angeordneten Elemente der hydraulischen Bremsanlage 10 sind Teil einer Blockierschutz- und Antriebsschlupfregeleinrichtung 41. Zu dieser Einrichtung 41 gehören ein elektronisches Steuergerät 42 sowie den einzelnen Fahrzeugrädern zugeordnete Raddrehzahlsensoren 43. Das Steuergerät 42 vermag Signale der Raddrehzahlsensoren 43 auszuwerten und in Schaltsignale für die elektrischen Baugruppen der Bremsanlage 10 umzusetzen. Dabei ist im Bremskreis I Blockierschutzregelbetrieb an den nicht angetriebenen Fahrzeugrädern und im nicht beschriebenen Bremskreis II Blockierschutz- und Antriebsschlupfregelbetrieb an den angetriebenen Fahrzeugrädern möglich.

Das Auslaßventil 31 der Ventilanordnungen 21, 22 zur Bremsdruckmodulation hat folgenden, in Figur 2 dargestellten Aufbau:
Das Auslaßventil 31 weist eine Spule 46 auf, welche anschluß- und umfangsseitig von einem topfförmigen Joch 47 umschlossen ist. Anschlußabgewandt ist das Joch 47 mit einem Jochboden 48 verbunden. Die Spule 46 sowie der Jochboden 48 sind durch ein koaxial verlaufendes Führungsrohr 49 aus nicht magnetisierbarem Stahl durchdrungen. Das über den Jochboden 48 nach unten hinausragende Führungsrohr 49 besitzt einen Bodeneinzug 50, welcher bodenseitig einen kreisförmigen Durchbruch 51 freiläßt. Im Führungsrohr 49 sind vom Bodeneinzug 50 ausgehend ein Drosseleinsatz 52, ein eingepreßter Ventilkörper 53, ein durch Magnetkraft längsbewegbarer Anker 54 sowie ein Polstück 55 aufgenommen.

Der am Bodeneinzug 50 abgestützte Ventilkörper 53 besitzt eine abgestufte Durchgangsbohrung 58, welche ankerseitig nach einem Querschnitt von weniger als 1 mm Durchmesser in einem Ventilsitz 59 endet. Im Bereich des Ventilsitzes 59 besitzt das Führungsrohr 49 seitlich einen Durchbruch 60. Unter der Kraft einer zwischen dem Anker 54 und dem Polstück 55 im Führungsraum 49 angeordneten Ventilschließfeder 61 greift am Ventilsitz 59 eine am Anker aufgenommene Kugel als Ventilschließglied 62 an.

Der Ventilsitz 59 und das Ventilschließglied 62 bilden ein Sitzventil, dessen Hub mittels eines Längenmeßwerkzeugs eingestellt ist. Hierzu wird ein strichpunktiert angedeuteter Taststift 63 von unten in die Durchgangsbohrung 58 des Ventilkörpers 53 vor der Montage des Drosseleinsatzes 52 eingeführt und zum Angriff am Ventilschließglied 62 gebracht. Durch Verschieben des Polstückes 55 im Führungsrohr 49 wird nun der Ankerhub eingestellt. Abschließend wird das Polstück 55 durch Schweißung mit dem Führungsrohr 49 verbunden. Die Befestigung des Führungsrohres 49 ist durch eine Bördelverbindung zwischen einem Bund 64 des Polstücks 55 und dem Joch 47 erzielt.

Ausgehend vom Jochboden 48 sind auf das Führungsrohr 49 eine Stützscheibe 67, ein Dichtungsring 68 sowie ein Hülsenfilter 69 aufgesteckt. Außerdem ist das Auslaßventil 31 mit dem bereits erwähnten Drosseleinsatz 52 vervollständigt, welcher folgenden Aufbau hat:

Der Drosseleinsatz 52 besitzt ein buchsenförmiges Teil 72, in welches ein hülsenförmiger Drosseleinsatz 73 eingepreßt ist. Der Drosseleinsatz 73 hat einen Boden 74 mit einer Drosselbohrung 75, deren Durchmesser wenige Zehntel Millimeter beträgt. Unterhalb des Bodens 74 des Drosseleinsatzes 73 ist in das buchsenförmige Teil 72 eine Ringscheibe 76 eingebördelt. Ringscheibenabgewandt ist das buchsenförmige Teil 72 mit einem Flansch 77 versehen.

Im Drosseleinsatz 52 ist gleichachsig zwischen dem Flansch 77 und der Ringscheibe 76 eine Dichtung in Form einer radial dichtenden Doppellippen-Manschette 78 aufgenommen. Dabei erstreckt sich die innere Lippe 79 der Manschette 78 dicht anliegend am buchsenförmigen Teil 72, dessen Flansch 77 die Stirnseite der inneren Lippe 79 übergreift. Ein vom Mitteldurchbruch 80 der Manschette 78 radial ausgehender Boden 81 erstreckt sich entlang der Ringscheibe 76. Vom Außenrand des Boden 81 ausgehend ist die Manschette 78 mit einer gleichsinnig zur inneren Lippe 79 verlaufenden äußeren Lippe 82 versehen. Der Flansch 77 des dicht im Mitteldurchbruch 80 der Manschette 78 aufgenommenen buchsenförmigen Teils 72 zentriert den in den Ventilkörper 53 eingefügten Drosseleinsatz 52. Die innere Lippe 79 der Manschette 78 greift dabei dichtend am Innenumfang der Durchgangsbohrung 58 des Ventilkörpers 53 an.

Das mit den vorerwähnten Bauteilen vervollständigte Auslaßventil 31 ist in einer abgestuften Bohrung 85 eines Ventilblocks 86 aufgenommen. Ein umfangseitig des Jochs 47 eingepreßter Haltering 87 sichert das Auslaßventil 31 in dieser Position. In die Bohrung 85 des Ventilblocks 86 münden zwei druckmittelführende Kanäle: Ein oberer, umfangsseitiger erster Kanal 88, welcher z.B. mit der Radbremse 14 der in Figur 1 dargestellten hydraulischen Bremsanlage 10 in Verbindung steht; ein bodenseitiger Kanal 89 führt zur Hochdruckpumpe 36 bzw. der Speicherkammer 37 der Bremsanlage 10. Die beiden Kanäle 88, 89 sind daher Teil des Rückführleitungszweigs 30.

Bei der Bremsdruckmodulation, während der in Phasen für Druckabbau das Auslaßventil 31 in seine Durchlaßstellung 31b geschaltet ist und demzufolge das Ventilschließglied 62 vom Ventilsitz 59 abgehoben ist, strömt Druckmittel durch den Kanal 88 im Ventilblock 86 und den Durchbruch 60 in das Führungsrohr 49 und von dort durch den Ventilsitz 59 und die Durchgangsbohrung 58 des Ventilkörpers 53 unter Überwindung der im Mitteldurchbruch 80 der Manschette 78 liegenden Drosselbohrung 75 des Drosseleinsatzes 52 in den Kanal 89 zur Hochdruckpumpe 36 bzw. zu der Speicherkammer 37. Dabei verhindert der Dichtungsring 68 einen Austritt von Druckmittel aus der Bohrung 85 des Ventilblocks 86. Da die äußere Lippe 82 der Manschette 78 am Innenumfang der Bohrung 85 zwischen den beiden Kanälen 88, 89 angreift, kann das Druckmittel die Drosselbohrung 75 nicht umgehen.

Bei seine Sperrstellung 31a einnehmenden Auslaßventil 31 ist das Druckmittel jedoch in der Lage, vom Kanal 89 unter Umgehung des Sitzventils zum Kanal 88 zu fließen. Hierbei hebt die in geringem Maße axial bewegbare Ringscheibe 76 von einer Stufe 90 der Bohrung 85 ab, so daß Druckmittel unter Überwindung der äußeren Lippe 82 der Manschette 78 außerhalb des Führungsrohres 49 zum Kanal 88 fließen kann. Dieser Strömungsweg bildet somit die Bypassleitung 32 gemäß Figur 1, während die äußere Lippe 82 der Manschette 78 das Rückschlagventil 33 verkörpert.

Bei einer normalen, vom Fahrer des Fahrzeugs ausgelösten Bremsung ist es bei nicht völlig dicht schließendem Auslaßventil 31 möglich, daß Druckmittel beispielsweise durch den Rückführleitungszweig 30 und die Rückführleitung 28 in die Speicherkammer 37 fließt. Eine mit Druckmittel teilgefüllte Speicherkammer 37 ist jedoch schädlich, wenn im Falle der Bremsdruckmodulation Druckmittel aus wenigstens einer der zugeordneten Fahrzeugbremsen 13, 14 abgeführt werden muß. Da die Speicherkammer 37 einen von einer vorgespannten Druckfeder belasteten Kolben (nicht dargestellt) besitzt, kann das fehlerhafterweise in der Speicherkammer 37 aufgenommene Druckmittel bei Nichtbetätigung der Bremse auf dem Weg über die Rückführleitung 28 und den entsprechenden Rückführleitungszweig 30 unter Überwindung des von der Manschette 78 gebildeten Rückschlagventils 33 in der Bypassleitung 32 in die Bremsleitung 20 zurück zum Hauptbremszylinder 11 und in den Druckmittel-Vorratsbehälter 12 fließen. Hierdurch findet eine selbsttätige Entleerung der Speicherkammer 37 statt, so daß diese für die Bremsdruckmodulation mit ihrem vollen Aufnabmevolumen zur Verfügung steht.

## Patentansprüche

1. In einem Ventilblock (86) angeordnetes elektromagnetbetätigtes Ventil (31), insbesondere für hydraulische Bremsanlagen (10) von Kraftfahrzeugen mit Blockierschutz- und /oder Antriebsschlupfregeleinrichtung (41),
mit den folgenden Merkmalen:
- in einem ventilblockseitig offenen Führungsrohr (49) sind ein feststehender Ventilkörper (53) mit einer von einem stirnseitigen Durchbruch (51) her zugänglichen Durchgangsbohrung (58) und einem Ventilsitz (59), ein durch Magnetkraft längsbewegbarer Anker (54) mit einem Ventilschließglied (62), ein am Führungsrohr (49) befestigtes Polstück (55) sowie zwischen diesem und dem Anker (54) eine Ventilschließfeder (61) wenigstens mittelbar aufgenommen,
- das Führungsrohr (49) ist in einer Bohrung (85) des Ventilblocks (86) angeordnet, in die umfangsseitig und stirnseitig des Führungsrohres (49) je ein druckmittelführender Kanal (88, 89) einmünden,
- zwischen den beiden Kanälen (88, 89) ist eine radialdichtende Dichtung (78) angeordnet, welche einerseits am Innenumfang der Ventilblockbohrung (85) und andererseits am im Führungsrohr (49) befestigten Ventilkörper (53) angreift,
gekennzeichnet durch die weiteren Merkmale:
- die Dichtung ist als Doppellippen-Manschette (78) ausgebildet,
- ventilsitzabgewandt ist in der Durchgangsbohrung (58) des Ventilkörpers (53) die eine, innere Lippe (79) der radialdichtenden Doppellippen-Manschette (78) aufgenommen, deren andere, äußere Lippe (82) am Innenumfang der Ventilblockbohrung (85) angreift,
- der stirnseitig des Ventilkörpers (53) verlaufende Boden (81) der Doppellippen-Manschette (78) ist unter Zwischenlage einer Ringscheibe (76) an einer Stufe (90) der Ventilblockbohrung (85) abgestützt,
- von der inneren Lippe (79) der Doppellippen-Manschette (78) ist ein Hülsenform aufweisender Drosseleinsatz (73) umgriffen, dessen eine Drosselbohrung (75) aufweisender Boden (74) im Mitteldurchbruch (80) der Manschette (78) liegt,
- der Drosseleinsatz (73) ist axial wenigstens mittelbar an der Ringscheibe (76) abgestützt,
- in dem Führungsrohr (49), welches einen Bodeneinzug (50) mit einem stirnseitigen Durchbruch (51) und einen ventilsitzseitigen Durchbruch (60) hat, sind von diesem Bodeneinzug (50) ausgehend der Drosseleinsatz (73), der Ventilkörper (53), der Anker (54), die Ventilschließfeder (61) und das Polstück (55) hintereinander aufgenommen.

2. Ventil nach Anspruch 1, gekennzeichnet durch die Merkmale:
- ein buchsenförmiges Teil (72) ist im Mitteldurchbruch (80) der Doppellipppen-Manschette (78) dicht aufgenommen,
- ein Flansch (77) des buchsenförmigen Teils (72) greift an der Stirnseite der inneren Manschettenlippe (79) an,
- die Ringscheibe (76) ist in das buchsenförmige Teil (72) eingebördelt,
- der hülsenförmige Drosseleinsatz (73) ist in das buchsenförmige Teil (72) eingepreßt.

## Claims

1. Electromagnetic valve (31) arranged in a valve block (86), intended, in particular, for hydraulic brake systems (10) of motor vehicles with an anti-lock and/or traction-control arrangement (41),
having the following features:
- a fixed valve body (53) with a through hole (58) accessible from an opening (51) at the end and with a valve seat (59), an armature (54) which can be moved longitudinally by magnetic force and has a valve-closing member (62), a pole piece (55) secured on the guide tube (49) and, between the pole piece and the armature (54), a valve-closing spring (61) are accommodated at least indirectly in a guide tube (49) open on the valve-block side,
- the guide tube (49) is arranged in a hole (85) in the valve block (86), into which pressure-medium-carrying passages (88, 89) open at the circumference and the end of the guide tube (49) respectively,
- arranged between the two passages (88, 89) is a radially sealing seal (78) which engages, on the one hand, on the inner circumference of the valve-block hole (85) and, on the other hand, on the valve body (53) secured in the guide tube (49),
characterized by the further features:
- the seal is designed as a double-lip cup packing (78),
- one, inner lip (79) of the radially-sealing double-lip cup packing (78) is accommodated in the through hole (58) of the valve body (53) at the end remote from the valve seat while its other, outer lip (82) engages on the inner circumference of the valve-block hole (85),
- the bottom (81) of the double-lip cup packing (78), which extends across the end of the valve body (53) is supported on a step (90) of the valve-block hole (85) via an annular washer (76),
- the inner lip (79) of the double-lip cup packing (78) surrounds a throttle insert (73), the bottom (74) of which, which has a throttle hole (75), lies in the central opening (80) of the cup packing (78),
- the throttle insert (73) is supported axially, at least indirectly, on the annular washer (76),
- the throttle insert (73), the valve body (53), the armature (54), the valve-closing spring (61) and the pole piece (55) are accommodated one behind the other in the guide tube (49), which has a bottom draw-in (50) with an opening (51) at the end and an opening (60) at the valve-seat end, starting from this bottom draw-in (50).

2. Valve according to Claim 1, characterized by the following features:
- a bush-shaped part (72) is accommodated leaktightly in the central opening (80) of the double-lip cup packing (78),
- a flange (77) of the bush-shaped part (72) engages on the end of the inner cup-packing lip (79),
- the annular washer (76) is flanged into the bush-shaped part (72),
- the sleeve-shaped throttle insert (73) is press-fitted into the bush-shaped part (72).

## Revendications

1. Soupape (31) à commande électromagnétique disposée dans un bloc d'appareils de distribution et de régulation (86), notamment pour des systèmes de freinage (10) hydrauliques de véhicules automobiles avec dispositif de réglage (41) de la protection contre le blocage et/ou du dispositif régulateur du glissement de l'entraînement, avec les particularités suivantes :
- dans un tube de guidage (49) ouvert du côté du groupe d'appareils de distribution et de régulation sont logés un corps de soupape fixe (53) avec un alésage traversant (58) accessible à partir d'une ouverture frontale (51) et avec un siège de soupape (59), un induit (54) susceptible d'être déplacé longitudinalement par la force magnétique avec un organe de fermeture de soupape (62), une pièce polaire (55) fixée au tube de guidage (49) ainsi qu'entre cette pièce et l'induit (54) un ressort de fermeture de soupape (61),
- le tube de guidage (49) est disposé dans un alésage (85) du bloc (86), alésage dans lequel débouche respectivement sur le côté périphérique et sur le côté frontal du tube de guidage (49) un canal (88, 89) dans lequel passe du liquide de frein,
- entre les deux canaux (88, 89) est disposé un joint d'étanchéité (78) étanchant radialement et qui vient en prise d'une part contre la périphérie interne de l'alésage (85) du bloc de soupape et d'autre part contre le corps de soupape (51) fixé dans le tube de guidage (49),
soupape caractérisée en ce que :
- le joint d'étanchéité est réalisé sous la forme d'une manchette (78) à double lèvre,
- à l'opposé du siège de soupape est logé dans l'alésage traversant (58) du corps de soupape (53) la lèvre interne (79) de la manchette à double lèvre (78) assurant une étanchéité radiale, et dont l'autre lèvre, la lèvre externe (82), vient en prise contre la périphérie interne de l'alésage (85) du bloc de soupape,
- le fond (81) de la manchette à double lèvre (78) s'étendant du côté frontal du corps de soupape (53) prend appui, avec interposition d'un disque annulaire (76), contre un gradin (90) de l'alésage (85) du bloc de soupape,
- la lèvre interne (79) de la manchette (78) à double lèvre entoure un insert d'étranglement (73) ayant la forme d'une douille et dont le fond (74) comportant un perçage d'étranglement (75) se situe dans l'ouverture médiane (80) de la manchette (78),
- l'insert d'étranglement (73) prend appui axialement au moins indirectement contre le disque annulaire (76),
- dans le tube de guidage (49), qui a un renfoncement du fond (50) avec une ouverture côté frontal (51) et une ouverture (60) côté siège de soupape, sont logés successivement en partant de ce renfoncement de fond (50), l'insert d'étranglement (73), le corps de soupape (53), l'induit (54), le ressort de fermeture de la soupape (61) et la pièce polaire (55).

2. Soupape selon la revendication 1 caractérisée en ce que :
- une pièce en forme de douille (72) est logée de façon étanche dans l'ouverture médiane (80) de la manchette (78) à double lèvre,
- une bride (77) de la pièce en forme de douille (62) vient en prise contre le côté frontal de la lèvre interne (79) de la manchette,
- le disque annulaire (76) est serti dans la pièce en forme de douille (72),
- l'insert d'étranglement en forme de douille (73) est enfoncé dans la pièce en forme de douille (72).
